# EUROPÄISCHE PATENTSCHRIFT

(11) **EP 2 452 739 B1**
(45) Veröffentlichungstag und Bekanntmachung des Hinweises auf die Patenterteilung: **08.07.2015**
(21) Anmeldenummer: 11186077.1
(22) Anmeldetag: 21.10.2011
(51) Int. Cl.: B01D 46/10, B01D 46/52

(54) **Innenraumluftfilter und Filteranordnung**
Internal air filter and filter assembly
Filtre à air ambiant et agencement de filtre

(30) Priorität: 15.11.2010 DE 102010051197
(43) Veröffentlichungstag der Anmeldung: 16.05.2012
(73) Patentinhaber: Mann + Hummel GmbH, 71638 Ludwigsburg (DE)
(72) Erfinder: Ammersdörfer, Micha, 70327 Stuttgart (DE)

(56) Entgegenhaltungen:
- EP-A1- 1 391 234
- DE-A1- 3 439 255
- DE-A1- 19 528 670
- DE-B3- 10 302 919

## Beschreibung

### Technisches Gebiet

Die vorliegende Erfindung betrifft ein Filterelement, insbesondere einen Innenraumfilter zum Filtern von Luft für den Innenraum eines Kraftfahrzeugs. Ferner betrifft die Erfindung eine Filteranordnung mit einem solchen Filterelement.

Ein entsprechendes Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, wird die vorliegende Erfindung sowie die ihr zugrunde liegende Problematik nachfolgend für ein Filterelement zur Filterung von Luft für den Innenraum eines Kraftfahrzeugs beschrieben. Solche Filter werden nachfolgend auch kurz als KFZ-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, sodass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Faltenpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelementes entlang dem Filterpack aus dem gefalteten Medium vorgesehen. Diese Armierungselemente dienen der seitlichen Fixierung und Stabilisierung des zickzackförmigen Filtermediums und sind zum Beispiel mittels eines geeigneten Klebers an den seitlichen Kanten des Faltenpacks angebracht. Man spricht auch von Seitenbändern. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

### Stand der Technik

Die EP 1 391 234 A1 offenbart ein Innenraumfilter für Kraftfahrzeuge, bei dem ein kastenförmiges Kunststoffspritzteil als umlaufender Rahmen um ein Filtermedium angeordnet ist. An Außenflächen des Rahmens sind Sollknickstellen vorgesehen, so dass im Einbauzustand abstehende Dichtlippen gegen eine Gehäusewand drücken. Die Dichtlippen sollen in Luftströmungsrichtung hintereinander und spiegelbildlich zueinander angeordnet sein.

In der DE 195 32 436 C1 ist ein Filtereinsatz beschrieben, bei dem ein Faltenpack mit Seitenbändern und daran angebrachten Dichtstreifen versehen ist, welche mit der Oberkante des Faltenpacks abschließen. Durch den jeweiligen am Seitenband angeordneten Dichtstreifen kann in einer Filteraufnahme oder einem Filtergehäuse das Faltenpack dichtend eingesetzt werden.

Die vorgeschlagen Maßnahmen führen jedoch nicht zu einem festen Sitz des Fiitereiements oder Filtereinsatzes in dem jeweiligen Gehäuse.

Aus der DE 195 28 670 ist ein flexibler und stauchbarer Filtereinsatz mit Seitenbändem für die Anwendung als Innenraumfilter bekannt.

Aus der DE 103 02 919 ist ein nicht stauchbarer Filtereinsatz bekannt, dessen Kopfband mit beidseitig überstehenden Schenkeln versehen ist.

### Offenbarung der Erfindung

Vor diesem Hintergrund liegt der vorliegenden Erfindung die Aufgabe zugrunde, ein verbessertes Filterelement zu schaffen.

Diese Aufgabe wird durch ein Filterelement mit den Merkmalen des Anspruchs 1 gelöst sowie durch eine Filteranordnung gemäß Anspruch 7. Demgemäß wird ein Filterelement mit einem Faltenpack, zwei Seitenbändem, welche an gegenüberliegenden Faltenprofilen des Faltenpacks zum Fixieren der Faltenprofile befestigt sind, und mit mindestens einem Kopfband vorgeschlagen. Das Kopfband umfasst einen Mittelabschnitt und zwei über eine Höhe des Faltenpacks überstehende Schenkel.

Das Fluidfilterelement ist insbesondere als Innenraumluftfilter für Kraftfahrzeuge ausgestaltet.

Durch die überstehenden oder abstehenden Schenkel, die beispielsweise nach oben und unten gerichtet sind, ist ein besonders einfacher Einbau des Fluidfilterlements oder Innenraumluftfilters in eine Filteraufnahme möglich. Der Mittelabschnitt, welcher zusammen mit den Seitenbändern ein das Faltenpack umlaufendes Band bilden kann, ist mit den überstehenden Schenkeln ausgestattet. Die überstehenden Schenkel lassen sich umknicken oder umfalten und erzeugen dann eine Rückstellkraft derart, dass sie im entspannten Zustand mit dem Mittelabschnitt eine ebene Fläche bilden. Im eingebauten Zustand des Innenraumluftfilters wirken die abstehenden und überstehenden Schenkel zum Beispiel als Rastmittel in einer Filteraufnahme. Dadurch wird ein besonders fester Sitz in einer Filteraufnahme erzielt.

Vorzugsweise ist bei dem Innenraumluftfilter das Kopfbandmaterial materialeinstückig ausgeführt. Zum Ausbilden der überstehenden Schenkel und des Mittelabschnitts kann dies zumindest teilweise geschlitzt sein. Der Schlitz ist dabei vorzugsweise auf der Seite des Kopfbandes zum Faltenpack hin vorgesehen. Die überstehenden Schenkel lassen sich daher in Richtung von dem Faltenpack weg biegen. Sie schaffen jedoch eine Rückstellkraft in Richtung zum Faltenpack hin und richten sich im entspannten Zustand gerade zusammen mit dem Mittelabschnitt aus.

Bei einer Ausführungsform umfasst das Innenraumluftfilter ausschließlich das Faltenpack, zwei Seitenbänder, das Kopfband und Befestigungsmittel zum Befestigen der Seitenbänder an dem Faltenpack und des Mittelabschnitts des Kopfbands an Seitenbandkanten. Als Befestigungsmittel kommt ein geeignetes Klebstoffmaterial in Frage. Bei dieser Ausgestaltung erfordert das Innenraumluftfilter einen besonders geringen Materialaufwand, ist somit leicht und kann auch einfach nach vollständiger Beladung mit Schmutz entsorgt werden. Alternativ kann das Innenraumluftfilter auch zwei gleiche Kopfbänder, die einander gegenüber von dem Faltenpack angeordnet sind, umfassen.

Vorzugsweise ist das Seitenbandmaterial und/oder ein Filtermaterial des Faltenpacks derart flexibel ausgeführt, dass zumindest eine Stauchung des Innenraumluftfilters in Richtung entlang der Seitenbänder um eine Breite der überstehenden Schenkel des Kopfbands zum Einbau des Innenraumluftfilters in eine Filteraufnahme erfolgen kann. Das Innenraumluftfilter hat demnach eine eigene Stabilität, kann jedoch unter mäßiger Krafteinwirkung gestaucht werden.

In einem (mäßig) gestauchtem Zustand ist der Abstand zwischen der Endfalte, welche an der gegenüberliegenden Seite des Kopfbands vorgesehen ist und den senkrecht umgebogenen überstehenden Schenkeln gleich der Länge des Innenraumluftfilters im nicht komprimieren oder gestauchten Zustand, welcher im Wesentlichen der Länge der Seitenbänder entspricht.

Eine Höhe des Filterelements ist durch die Faltenprofile vorgegeben und entspricht einer Breite der Seitenbänder. Dabei ist eine Breite der überstehenden Schenkel mindestens 1/10 der Höhe des Innenraumluftfilters. Besonders bevorzugt ist die Breite der Schenkel mindestens 1/5 der Höhe des Innenraumluftfilters.

Die überstehenden Schenkel sind dabei in Richtung von dem Faltenpack weg umklappbar und bilden durch eine Rückstellkraft des Schenkelmaterials zusammen mit dem Mittelabschnitt einen im Wesentlichen flachen Streifen. Dieser sich ausbildende flache Streifen verschließt beispielsweise eine Einschuböffnung eines Filtergehäuses von innen.

Der Mittelabschnitt des Kopfbands ist vorzugsweise an Kanten der Seitenbänder befestigt.

Es wird ferner eine Filteranordnung mit einem Innenraumluftfilter wie vorbeschrieben und einem Filtergehäuse vorgeschlagen. Das Filtergehäuse hat eine Einschuböffnung für das Innenraum luftfilter, wobei die Einschuböffnung eine Breite und eine Höhe hat. Die Breite und die Höhe entsprechen im Wesentlichen einer Breite und einer Höhe des Innenraumluftfilters. Dabei drücken die überstehenden Schenkel in einem Einbauzustand des Innenraumluftfilters von innen gegen obere und untere Randbereiche der Einschuböffnung.

Vorzugsweise ist bei der Filteranordnung eine Tiefe des Filtergehäuses so groß wie eine Länge des Innenraumluftfilters. Dadurch wird eine passgenaue und besonders feste Montierung des Innenraumluftfilters im Filtergehäuse erzielt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine schematische perspektivische Darstellung einer ersten Ausführungsform eines Filterelements;
Fig. 2: eine schematische Darstellung einer Ausführungsform einer Filteranordnung in der Draufsicht mit einem Filterelement; und
Fig. 3: eine schematische Darstellung einer Ausführungsform einer Filteranordnung im Querschnitt beim Einsetzen eines Filterelements.

In den Figuren bezeichnen dieselben Bezugszeichen gleiche oder funktionsgleiche Elemente, soweit nichts Gegenteiliges angegeben ist.

### Ausführungsform(en) der Erfindung

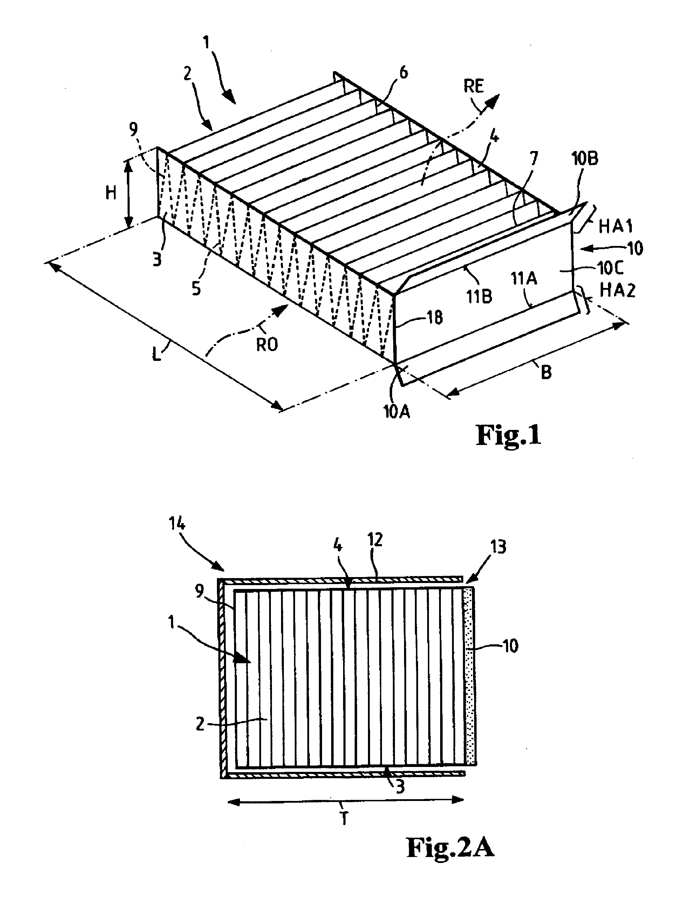

Die Figur 1 zeigt eine schematische perspektivische Darstellung einer ersten Ausführungsform eines Filterelements.

Das Filterelement 1 umfasst ein Faltenpack 2 aus zickzackförmig gefaltetem Filtermaterial. Das Filtermaterial kann ein Filtervliesmaterial sein, das für die Filterung von Rohfluid RO, beispielsweise Innenraumluft oder auch Verbrennungsluft für Kraftfahrzeuge geeignet ist. Das Faltenpack 2 kann dabei ein mehrlagiges Filtermaterial umfassen, bei dem Absorberpartikel zwischen verschiedenen Schichten angeordnet sind. Beispielsweise wird Rohfluid RO in der Orientierung der Figur 1 von unten zu dem Faltenpack 2 geführt, das Fluid durchströmt das Faltenpack 2 und Schmutzstoffe werden in dem Filtermaterial gehalten. Als Reinfluid RE tritt das filternde Fluid, wie Innenraumluft für Kraftfahrzeuge, nach oben aus. Selbstverständlich kann der Fluidstrom auch in anderer Richtung verlaufen, als in der Figur 1 dargestellt ist.

Man erkennt in der Figur 1 die zickzackförmigen Faltenprofile 5, die jeweils durch ein Seitenband 3, 4 fixiert werden. In der Darstellung der Figur 1 erkennt man vorne links gepunktet die Faltenprofile 5, welche durch das Seitenband 3 verdeckt sind. Die Seitenbänder 3, 4 sind beispielsweise auf die Faltenprofile 5 geklebt. In der Regel ist das Seitenbandmaterial etwas starrer als das Filtermaterial. Prinzipiell können jedoch dieselben Materialien verwendet werden. Das Faltenpack 2 gibt durch die Faltenprofile 5 die Höhe H des Filterelements vor.

Das Filterelement bzw. Innenraumluftfilter 1 ist kopfseitig mit einem Kopfband 10 ausgestattet. Das Kopfband 10 hat dabei drei Abschnitte. Ein erster Abschnitt, der Mittelabschnitt 10C ist auf Kanten 18 der Seitenbänder 3, 4 aufgeklebt. Der Mittelabschnitt 10C entspricht in seiner Breite der Höhe H des Filterelements 1. Es sind ferner abstehende Schenkel 10A, 10B vorgesehen, die nach oben und unten von dem Mittelabschnitt 10C des Kopfbands 10 abstehen. Es sind Faltkanten 11A, 11 B gebildet, die von einem einzigen Materialbogen für das Kopfband 10 die abstehenden Schenkel 10A, 10B und den Mittelabschnitt 10C definieren. Die abstehenden Schenkel 10A und 10B haben jeweils eine Breite HA1, HA2. Vorzugsweise ist die Breite HA1, HA2 ≥ 0,2 x H. Das gesamte Filterelement 1 hat eine Länge L, die durch die Länge der Seitenbänder 3, 4 vorgegeben ist.

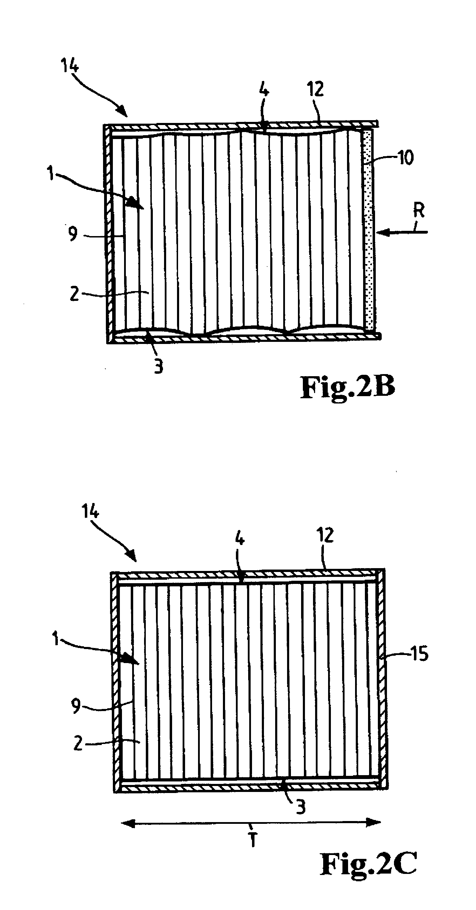

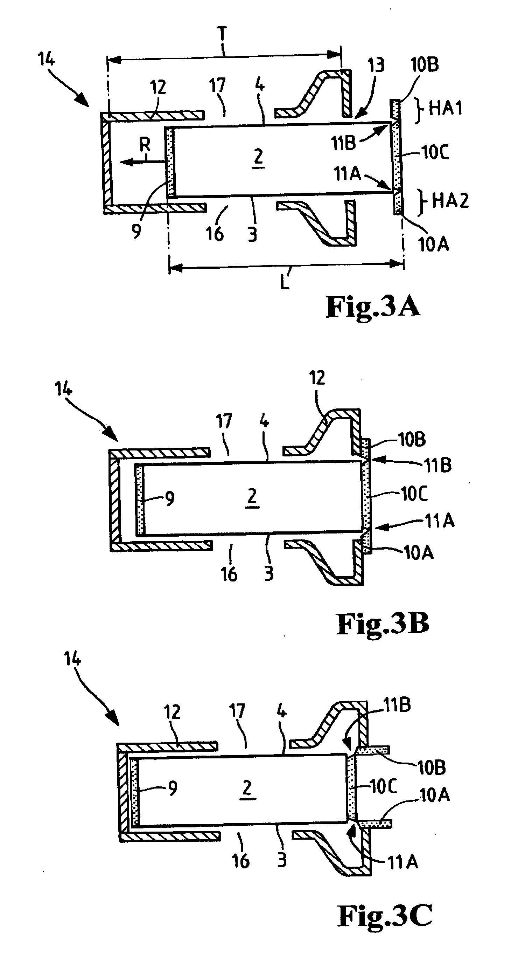

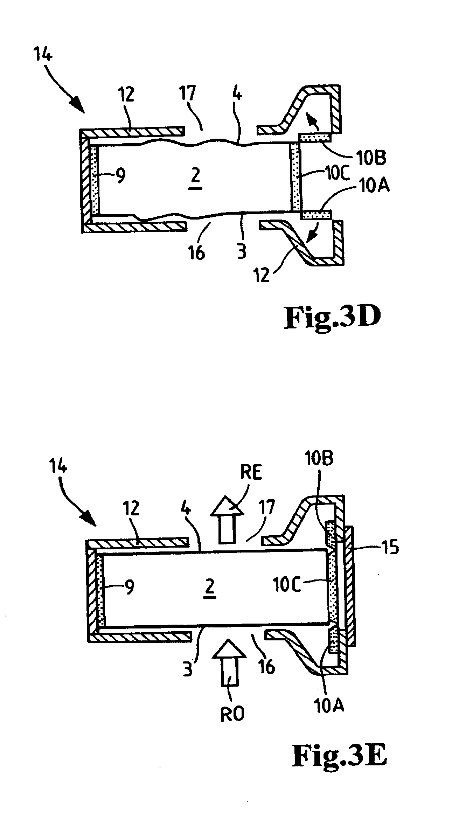

In der Figur 2 ist eine schematische Darstellung einer Ausführungsform einer Filteranordnung mit einem entsprechenden Filterelement in der Draufsicht dargestellt. Die Figur 3 zeigt dabei die Filteranordnung in der Querschnittsansicht beim Einsetzen eines Filterelements in das Gehäuse. Man erkennt in der Figur 2 ein Filtergehäuse 12 mit einer Öffnung 13, durch die das Filterelement 1 in Richtung senkrecht zu seinen Faltkanten des Faltenpacks 2 eingesetzt werden kann. Die Tiefe T des Gehäuses 12 entspricht dabei im Wesentlichen der Länge L des Filterelements 1. Das heißt, dass die abstehenden Schenkel (vgl. Figur 1) 10B, 10A des Kopfbands 10 mit ihrer jeweiligen Breite HA1, HA2 aus dem Gehäuse durch die Öffnung 13 herausragen. Durch einen leichten Druck oder eine Stauchung in Richtung zur Einschubrichtung R, wie es in der Figur 2B dargestellt ist, kann das Filterelement 1 gestaucht werden. Die Materialien des Faltenpacks 2 sowie der Seitenbänder 3 sind entsprechend ausgewählt, dass eine Stauchung senkrecht zur Faltrichtung des Faltenpacks 2 mindestens um die Breite der abstehenden Schenkel HA1 oder HA2 erfolgen kann, ohne dass eine Funktion im wieder entspannten Zustand gestört ist.

In der Figur 3 ist der Einschubmechanismus im Querschnitt genauer dargestellt. Die Figur 3A zeigt im Querschnitt das Filtergehäuse 2 mit seiner Einschuböffnung 13. Das Filterelement ist mit der rückseitigen Endfalte 9 zuerst in den Innenraum des Gehäuses 12 durch die Öffnung 13 eingeführt. Man blickt in der Darstellung der Figur 3 beispielsweise seitlich auf das Seitenband 3. Hinter dem Seitenband verdeckt ist das Faltenpack 2. Das Gehäuse 2 hat eine Anströmöffnung 16 und eine Abströmöffnung 17. Beim Betrieb der Filteranordnung 14 mit dem Filterelement durchströmt zu filterndes Rohfluid in der Orientierung der Figur 3 von unten das Faltenpack 2 und tritt als Reinfluid nach oben hin aus. Im entspannten Zustand bildet das Kopfband 10 mit dem Mittelabschnitt 10C und den beiden abstehenden Schenkeln 10A und 10B im Wesentlichen einen flachen Streifen aus.

Das Kopfband 10 ist an den Stellen des Übergangs zu en abstehenden Schenkeln 10A, 10B faltenpackseitig geschlitzt. Die Schlitze sind durch der Höhe des Seitenbands beabstandet. Man erkennt in Figur 3B beim weiteren Hineinschieben des Filterelements 1 in die Filteraufnahme oder das Filtergehäuse 12, dass das Kopfband 10 mit seinen abstehenden Schenkeln 10A, 10B von außen gegen die Ränder der Öffnung 13 stößt. Durch weiteres Einschieben und Drücken in der Orientierung der Figur 3 nach links, klappen die abstehenden Schenkel 10A und 10B um und werden von der Begrenzung der Einschuböffnung 13 umgelegt.

Durch noch weiteres Drücken des Filterelements entlang der Einschubrichtung R kann das Filterelement bzw. insbesondere das Faltenpack 2 und die Seitenbänder 3, 4 gestaucht werden. Es wird soweit gestaucht, dass die umgelegten abstehenden Schenkel 10A, 10B in den Innenraum des Gehäuses 12 reichen. Dies ist in der Figur 3D dargestellt. Durch die Rückstellkräfte des Kopfbandmaterials klappen die abstehenden Schenkel 10A, 10B in ihre entspannte Ursprungsposition um. Das bedeutet, dass das Kopfband 10 im entspannten Zustand wieder im Wesentlichen einen flachen Streifen bildet.

Ein Bediener oder Monteur kann nun auch den Druck bzw. die Stauchung des Filterelements in Einschubrichtung aufheben, so dass es in seiner Ausgangslänge zurückfedert. Die abstehenden Schenkel oder Abschnitte 10A oder 10B werden nun von innen gegen die Ränder der Gehäuseöffnung gedrückt. Es wird damit ein dichter und mit festem Sitz versehener Abschluss gebildet. Anschließend kann noch ein Deckel 15 die Öffnung 13 des Gehäuses 12 verschließen.

In der Figur 3E ist die Betriebssituation der Filteranordnung im Querschnitt dargestellt. Dieser Betriebszustand entspricht der in der Figur 2C dargestellten Draufsicht. Das Filterelement ist fest sitzend in die Filteraufnahme 12 eingeschoben, so dass durch die Eintritts- oder Anströmöffnung 16 Rohfluid zum Faltenpack 2 strömt, dieses durchläuft, wobei Schmutz und Ablagerungen in dem Faltenpack verbleiben, und wobei Reinfluid durch die Ausströmöffnung 17 austreten kann.

Die vorgeschlagene Filteranordnung und das Filterelement schaffen eine einfache Fixierung des Filterelements in seinem Gehäuse. Es sind keine zusätzlichen Mittel im Gehäuse notwendig, die durch die besondere Gestaltung des Kopfbands das Filterelement selbst einen federnden und festen Sitz im Filtergehäuse schaffen. Die mit der Rückstellkraft beaufschlagten Schenkel des Kopfbands schaffen quasi eine Verrastung an der Innenseite an der Einschuböffnung des Gehäuses.

Obwohl die vorliegende Erfindung anhand bevorzugter Ausführungsbeispiele näher erläutert wurde ist sie nicht darauf beschränkt, sondern vielfältig modifizierbar. Es können andere als die dargestellten Geometrien für Filterelemente und insbesondere der Kopfbänder gewählt werden. Dabei können die Gegebenheiten am Einbauort des Filters berücksichtigt werden. Es sind ferner weitere Ausführungsformen mit zum Beispiel vollständig umlaufenden Seiten- und Kopfbändern möglich. Es können auch Filterelemente mir zwei gleichen Kopfbändern an den gegenüberliegenden Kopf- oder Stirnseiten des Filterelements vorgesehen werden. Die genannten Materialen für das Seiten- und Kopfbandmaterial und das Filtermedium sind ebenfalls nur beispielhaft zu verstehen.

## Patentansprüche

1. Innenraumluftfilter (1) mit einem Faltenpack (2), zwei Seitenbändern (3, 4), welche an gegenüberliegenden Faltprofilen (5) des Faltenpacks (2) zum Fixieren der Faltenprofile (5) befestigt sind, und mit mindestens einem Kopfband (10), welches einen Mittelabschnitt (10C) und zwei über eine Höhe (H) des Faltenpacks (2) überstehende Schenkel (10A, 10B) umfasst, wobei Seitenbandmaterial und ein Filtermaterial des Faltenpacks (2) derart flexibel ausgeführt ist, dass zumindest eine Stauchung des Innenraumluftfilters (1) in Richtung entlang der Seitenbänder (3, 4) um eine Breite (HA1, HA2) der überstehenden Schenkel (10A, 10B) des Kopfbandes (10) zum Einbau des Innenraumluftfilters (1) in eine Filteraufnahme (12) erfolgen kann, wobei die überstehenden Schenkel (10A, 10B) in Richtung von dem Faltenpack (2) weg umklappbar sind und dieselben in einem entspannten Zustand durch eine Rückstellkraft des Schenkelmaterials zusammen mit dem Mittelabschnitt (10C) einen im Wesentlichen flachen Streifen ausbilden.

2. Innenraumluftfilter (1) nach Anspruch 1, wobei das Kopfband (10) materialeinstückig ausgeführt ist und zum Ausbilden der überstehenden Schenkel (10A, 10B) und des Mittelabschnitts (10C) zumindest teilweise geschlitzt ist.

3. Innenraumluftfilter (1) nach Anspruch 1 oder 2, wobei der Innenraumluftfilter (1) ausschließlich das Faltenpack (2), zwei Seitenbänder (3, 4), das Kopfband (10) und Befestigungsmittel zum Befestigen der Seitenbänder (3, 4) an dem Faltenpack (2) und des Mittelabschnitts (10C) des Kopfbandes (10) an Seitenbandkanten (18) aufweist.

4. Innenraumluftfilter (1) nach einem der Ansprüche 1-3, wobei eine Höhe (H) des Filterelements (1) durch die Faltenprofile (5) vorgegeben ist und einer Breite der Seitenbänder (3, 4) entspricht, und wobei eine Breite (HA1, HA2) der überstehenden Schenkel (10A, 10B) mindestens 1/10 der Höhe (H) des Innraumluftfilters (1) entspricht.

5. Innenraumluftfilter (1) nach Anspruch 4, wobei die Breite (HA1, HA2) der Schenkel (10A, 10B) mindestens 1/5 der Höhe (H) des Innraumluftfilters (1) entspricht.

6. Innenraumluftfilter (1) nach einem der Ansprüche 1 - 5, wobei der Mittelabschnitt (10C) des Kopfbands an Kanten (18) der Seitenbänder (3, 4) befestigt ist.

7. Filteranordnung (14) mit einem Innenraumluftfilter (1) nach einem der Ansprüche 1 - 6 und einem Filtergehäuse (12), welches eine Einschuböffnung (13) für das Innenraumluftfilter (1) aufweist, wobei die Einschuböffnung (13) eine Breite (B) und eine Höhe (H) aufweist, welche im Wesentlichen einer Breite (B) und einer Höhe (H) des Innenraumluftfilters (1) entspricht, und wobei die überstehenden Schenkel (10A, 10B) in einem Einbauzustand des Innenraumluftfilters (1) von innen gegen obere und untere Randbereiche der Einschuböffnung (13) drücken.

8. Filteranordnung (14) nach Anspruch 7, wobei eine Tiefe (T) des Filtergehäuses (12) einer Länge (L) des Innenraumluftfilters (1) entspricht.

## Claims

1. Passenger compartment air filter (1) with a pleated pack (2), two lateral strips (3, 4) which are attached to opposing folding profiles (5) of the pleated pack (2) for fixing the folding profiles (5), and with at least one headband (10) which comprises a central section (10C) and two legs (10A, 10B) protruding over a height (H) of the pleated pack (2), wherein lateral strip material and a filter material of the pleated pack (2) are flexibly designed in such a way that at least one buckling of the passenger compartment air filter (1) can be realized in the direction along the lateral strips (3, 4) around a width (HA1, HA2) of the protruding legs (10A, 10B) of the headband (10) for mounting the passenger compartment air filter (1) into a filter seat (12), wherein the protruding legs (10A, 10B) can be folded into the opposite direction of the pleated pack (2) and form, in an untensioned state, a substantially flat strip by means of a reset force of the leg material together with the central section (10C).

2. Passenger compartment air filter (1) according to claim 1, wherein the headband (10) is made as a single piece and at least partially slit for forming the protruding legs (10A, 10B) and the central section (10C).

3. Passenger compartment air filter (1) according to claim 1 or 2, wherein the passenger compartment air filter (1) features exclusively the pleated pack (2), two lateral strips (3, 4), the headband (10) and attachment means for attaching the lateral strips (3, 4) to the pleated pack (2) and the central section (10C) of the headband (10) to the lateral strip edges (18).

4. Passenger compartment air filter (1) according to one of the claims 1 to 3, wherein a height (H) of the filter element (1) is predefined by the folding profiles (5) and corresponds to a width of the lateral strips (3, 4), and wherein a width (HA1, HA2) of the protruding legs (10A, 10B) corresponds at least to one-tenth of the height (H) of the passenger compartment air filter (1).

5. Passenger compartment air filter (1) according to claim 4, wherein the width (HA1, HA2) of the legs (10A, 10B) corresponds at least to one-fifth of the height (H) of the passenger compartment air filter (1).

6. Passenger compartment air filter (1) according to one of the claims 1 to 5, wherein the central section (10C) of the headband is attached to the edges (18) of the lateral strips (3, 4).

7. Filter assembly (14) with a passenger compartment air filter (1) according to one of the claims 1 to 6 and a filter housing (12), which features an insertion opening (13) for the passenger compartment air filter (1), wherein the insertion opening (13) features a width (B) and a height (H) which corresponds substantially to a width (B) and to a height (H) of the passenger compartment air filter (1), and wherein the protruding legs (10A, 10B) in an installed state of the passenger compartment air filter (1) push from the inside against upper and lower peripheral areas of the insertion opening (13).

8. Filter assembly (14) according to claim 7, wherein a depth (T) of the filter housing (12) corresponds to a length (L) of the passenger compartment air filter (1).

## Revendications

1. Filtre à air d'habitacle (1) avec un ensemble de plis (2), avec deux bandes latérales (3, 4) qui sont fixées à des profils de plis (5) opposés de l'ensemble de plis (2) afin de fixer les profils de plis (5) et avec au moins un bandeau (10) qui comprend une section médiane (10C) et deux pattes (10A, 10B) dépassant d'une hauteur (H) de l'ensemble de plis (2), le matériau des bandes latérales et un matériau filtrant de l'ensemble de plis (2) présentant une flexibilité telle qu'il soit possible d'effectuer au moins un refoulement du filtre à air d'habitacle (1) le long des bandes latérales (3, 4) sur une largeur (HA1, HA2) des pattes dépassantes (10A, 10B) du bandeau (10) afin de monter le filtre à air d'habitacle (1) dans un logement de filtre (12), les pattes dépassantes (10A, 10B) pouvant être rabattues dans la direction opposée à l'ensemble de plis (2) et formant, dans une position détendue, une bande essentiellement plate sous l'effet d'une force de rappel du matériau des pattes avec la section médiane (10C).

2. Filtre à air d'habitacle (1) selon la revendication 1, le bandeau (10) étant exécuté en une seule pièce et étant fendu, au moins partiellement, afin de former les pattes dépassantes (10A, 10B) et la section médiane (10C).

3. Filtre à air d'habitacle (1) selon la revendication 1 ou 2, le filtre à air d'habitacle (1) présentant exclusivement l'ensemble de plis (2), deux bandes latérales (3, 4), le bandeau (10) et des éléments de fixation pour fixer les bandes latérales (3, 4) à l'ensemble de plis (2) ainsi que la section médiane (10C) du bandeau (10) aux arêtes des bandes latérales (18).

4. Filtre à air d'habitacle (1) selon l'une des revendications 1 à 3, une hauteur (H) de l'élément filtrant (1) étant prédéfinie par les profils de plis (5) et correspondant à une largeur des bandes latérales (3, 4), et une largeur (HA1, HA2) des pattes dépassantes (10A, 10B) correspondant à au moins un dixième de la hauteur (H) du filtre à air d'habitacle (1).

5. Filtre à air d'habitacle (1) selon la revendication 4, la largeur (HA1, HA2) des pattes (10A, 10B) correspondant à au moins un cinquième de la hauteur (H) du filtre à air d'habitacle (1).

6. Filtre à air d'habitacle (1) selon l'une des revendications 1 à 5, la section médiane (10C) du bandeau étant fixée à des arêtes (18) des bandes latérales (3,4).

7. Agencement de filtre (14) avec un filtre à air d'habitacle (1) selon l'une des revendications 1 à 6 et avec un boîtier de filtre (12) qui présente un orifice d'insertion (13) pour le filtre à air d'habitacle (1), l'orifice d'insertion (13) présentant une largeur (B) et une hauteur (H) qui correspondent essentiellement à une largeur (B) et à une hauteur (H) du filtre à air d'habitacle (1), et les pattes dépassantes (10A, 10B), dans une position de montage du filtre à air d'habitacle (1), appuyant de l'intérieur contre des zones marginales supérieures et inférieures de l'orifice d'insertion (13).

8. Agencement de filtre (14) selon la revendication 7, une profondeur (T) du boîtier de filtre (12) correspondant à une longueur (L) du filtre à air d'habitacle (1).
